Europäisches Patentamt

European Patent Office

Office européen des brevets

(19)

(11) Veröffentlichungsnummer: **0 065 162**
**B1**

(12) **EUROPÄISCHE PATENTSCHRIFT**

(45) Veröffentlichungstag der Patentschrift:
14.08.85

(21) Anmeldenummer: 82103734.8

(22) Anmeldetag: 03.05.82

(51) Int. Cl.⁴: **C 08 F 220/10, C 08 F 2/24,**
**C 09 D 3/80**

(54) Verfahren zur Herstellung von wässrigen Polyacrylat-Dispersionen mit verbessertem Fliessverhalten.

(30) Priorität: 11.05.81 DE 3118593

(43) Veröffentlichungstag der Anmeldung:
24.11.82 Patentblatt 82/47

(45) Bekanntmachung des Hinweises auf die Patenterteilung:
14.08.85 Patentblatt 85/33

(84) Benannte Vertragsstaaten:
AT BE CH DE FR GB IT LI NL SE

(56) Entgegenhaltungen:
DE - A - 1 942 423
GB - A - 1 155 275

(73) Patentinhaber: BASF Aktiengesellschaft,
Carl-Bosch-Strasse 38, D-6700 Ludwigshafen (DE)

(72) Erfinder: Mueller-Mall, Rudolf, Dr., Ulmenweg 39,
D-6701 Neuhofen (DE)
Erfinder: Melan, Michael, Dr., Hans-Willmann-Strasse 4,
D-6706 Wachenheim (DE)

ACTORUM AG

**Beschreibung**

Diese Erfindung betrifft ein Verfahren zur Herstellung von wässrigen Polyacrylat-Dispersionen mit verbessertem Fliessverhalten, die insbesondere als Bindemittel für Anstrichmittel geeignet sind.

Es ist schon lange bekannt, dass man wässrige Polyacrylat-Dispersionen durch Polymerisation von Acryl- und/oder Methacrylsäure-Estern 1 bis 10 C-Atome enthaltende Alkanole mit 0 bis 60 Gew.-% Styrol und/oder 0 bis 20 Gew.-% Vinylestern und/oder 0 bis 10 Gew.-% wasserlöslichen monoolefinisch ungesättigten Comonomeren, wie Acrylsäure, Methacrylsäure, Itaconsäure, Acrylamid, Methacrylamid usw. durch Polymerisation der Monomeren in wässriger Emulsion bei 30 bis 95°C in Gegenwart radikalbildender Polymerisationsinitiatoren, wie besonders wasserlöslichen Peroxiden, z.B. Persulfaten wie Ammoniumpersulfat oder Kaliumpersulfat, herstellen kann. Dabei werden im allgemeinen anionische und/oder nichtanionische Emulgatoren in Mengen von 0,5 bis 5 Gew.-% eingesetzt. Die Emulsionspolymerisation wird meist ansatzweise durchgeführt, wobei die Monomeren zum Teil in einer wässrigen Vorlage, die Polymerisationsinitiator und Emulgator enthält, vorgelegt und die restlichen Monomeren nach dem Anspringen der Emulsionspolymerisation bei erhöhter Temperatur als solche oder in Form einer wässrigen Emulsion zugefahren werden. Die rheologischen Eigenschaften der nach diesem bekannten Verfahren hergestellten Polyacrylat-Dispersionen lassen jedoch beim Einsatz als Anstrichmittel bzw. Bindemittel für Anstrichmittel zu wünschen übrig, da oft bei guter Füllbarkeit der Dispersionen ein verbessertes Fliessverhalten erwünscht ist.

Zur Erhöhung der Viskosität von Polyacrylat-Dispersionen hat man schon Schutzkolloide, wie Polyvinylalkohole, Hydroxyethylcellulose und Vinylpyrrolidon-Copolymerisate nach der Polymerisation zugesetzt. Dabei wird zwar die Verträglichkeit mit den in Anstrichmitteln verwendeten Pigmenten erhöht, jedoch nimmt die Wasserempfindlichkeit der Filme aus solchen Dispersionen stark zu. Zur Erzielung eines besseren Fliessverhaltens und zur Einsparung von nachträglich zuzusetzendem Schutzkolloid hat man auch schon die Emulsionspolymerisation von Acrylsäureestern in Gegenwart von Schutzkolloiden durchgeführt. Dabei tritt jedoch, insbesondere bei der Emulsionspolymerisation ausschliesslich von Acrylestern, d.h. ohne Comonomere wie Vinylester, oft Koagulation ein oder es werden hochviskose, schlecht fliessende Polyacrylat-Dispersionen erhalten, die sich nicht als Bindemittel für Anstrichmittel eignen. Bei dem Verfahren der DE-AS 1 570 312 hat man des weiteren schon versucht, bei der Emulsionspolymerisation von Acrylsäureestern Schutzkolloide erst nach einem bestimmten Umsatz in das Polymerisationsgemisch zu geben. Der richtige Zeitpunkt des Zusatzes ist jedoch schwierig zu wählen, so dass eine reproduzierbare Viskositäteinstellung nur schlecht möglich ist.

Schliesslich ist es auch bekannt, bei der Emulsionspolymerisation von Acrylsäureestern öllösliche Regler und gegebenenfalls Schutzkolloide mitzuverwenden (vgl. z.B. GB-PS 1 466 660, DE-OS 2 256 154, 1 942 423, 1 745 563 und 2 620 189 sowie DE-AS 1 206 591). Dabei müssen jedoch verhältnismässig hohe Konzentrationen der Regler gewählt werden, die zu Geruchsbelästigungen führen. Arbeitet man dabei jedoch unter Verwendung von wasserlöslichen Reglern in Vorlage und Zulauf gemäss dem Verfahren der DE-OS 2 842 719, so können in gut reproduzierbarer Weise Polyacrylat-Dispersionen mit verbessertem Fliessverhalten hergestellt werden. Nachteilig ist jedoch bei diesem Verfahren, dass hinsichtlich der einsetzbaren Schutzkolloidmenge sehr enge Grenzen gesetzt sind. Erhöht man beispielsweise in einer gegebenen Rezeptur die Schutzkolloidkonzentration, so werden oft dilatante Dispersionen erhalten, die sich für den vorgesehenen Verwendungszweck nicht mehr eignen.

Es wurde nun gefunden, dass man wässrige Polyacrylat-Dispersionen mit verbessertem Fliessverhalten durch Polymerisation von Acryl- und/oder Methacrylsäure-Estern 1 bis 10 C-Atome enthaltende Alkanole mit 0 bis 60 Gew.-% Styrol und/oder 0 bis 20 Gew.-% Vinylestern und/oder 0 bis 10 Gew.-% wasserlöslichen monoolefinisch ungesättigten Comonomeren unter Emulsionszulauf der Monomeren in wässriger Emulsion bei 30 bis 95°C in Gegenwart üblicher radikalbildender Polymerisations-Initiatoren, von Schutzkolloiden, 0,5 bis 5 Gew.-% nichtionischen Emulgatoren und gegebenenfalls von Reglern, wobei die Gewichtsprozente jeweils auf die Gesamtmenge der Monomeren bezogen sind, und die Polymerisations in einer Vorlage, die gegebenenfalls einen kleinen Teil der Schutzkolloide und/oder von monoolefinisch ungesättigten Mono- und/oder Dicarbonsäuren enthält, begonnen wird, mit Vorteil herstellen kann, indem man das Schutzkolloid und/oder eine monoolefinisch ungesättigte Mono- und/oder Dicarbonsäure zumindest zum Teil dem Polymerisationsgemisch während des je Zeiteinheit gleichmässig erfolgenden Zulaufs der Monomerenemulsion in je Zeiteinheit zunehmenden Mengen zuführt. Hierdurch ist es möglich, in sehr gut reproduzierbarer Weise die Viskosität der erhaltenen Dispersionen sowie die Teilchengrösse der Polymerisate zu beeinflussen und Polyacrylat-Dispersionen zu erhalten, die bei verhältnismässig hohem Schutzkolloidgehalt, der bis zu 7 Gew.-% betragen kann, praktisch koagulatfrei sind.

Als Acryl- und/oder Methacrylsäure-Ester kommen vor allem die der 1 bis 4 C-Atome enthaltenden Alkanole, wie Methanol, Ethanol, n-Propanol, n-Butanol und iso-Butanol in Frage sowie ferner die des 2-Ethylhexanols. Von besonderem Interesse sind Methylmethacrylat, Ethylacrylat, n-Butylacrylat und Isobutylacrylat sowie ferner 2-Ethylhexylacrylat und -methacrylat, tert.-Butylacrylat und -methacrylat. Als Vinylester kommen vor allem Vinylacetat, Vinylproprionat, Vinyllaurat und Vinylpivalat in Fage. Geeignete wasserlösliche monoolefinisch ungesättigte Comonomere sind besonders α,β-monoolefinisch ungesättigte Mono- und Dicarbonsäuren mit vorzugsweise 3 bis 5 C-Atomen sowie deren gegebenenfalls an den Stickstoffatomen substituierte Amide und ferner Monoalkylester 1 bis 4 C-Atome enthaltende Alkanole mit 4 bis 5 C-Atomen enthaltenden α,β-monoolefinisch ungesättigten Dicarbonsäuren

sowie Vinylsulfonsäure und deren wasserlösliche Salze. Beispiele hierfür sind vor allem Acrylsäure, Methacrylsäure, Itaconsäure, Acrylsäureamid, Methacrylsäureamid, Maleinsäuremonoethylester, Maleinsäuremonomethylester, Maleinsäuremono-n--butylester, N-Methylacrylamid, N-n-Butylmethacrylamid, N-Alkylolamide der Acryl- und Methacrylsäure sowie N-Methylolacryl- und -methacrylamid, N-n-Butoximethylacrylamid und N-Ethoxymethylmethacrylamid. Der Anteil derartiger wasserlöslicher Comonomerer in den Copolymerisaten liegt meist zwischen 0,1 und 7 Gew.-% und beträgt vorzugsweise 0,5 bis 5 Gew.-%, bezogen auf die Gesamtmenge der Monomeren.

Als Schutzkolloide, die im allgemeinen bei dem neuen Verfahren in Mengen von 0,1 bis 10, vorzugsweise von 0,3 bis 2 Gew.-% eingesetzt werden, kommen vor allem Hydroxyalkylcellulosen einer Viskosität ihrer 2%igen wässrigen Lösung von 10 bis 1000 mPa.s insbesondere Hydroxyethylcellulose in Frage sowie ferner Polyvinylalkohole, wasserlösliche Polymerisate des N-Vinylpyrrolidons, die meist K-Werte von 30 bis 150, insbesondere von 50 bis 100 aufweisen (bestimmt nach DIN 53726) und die im allgemeinen mindestens 20, vorzugsweise 40 bis 100% ihres Gewichts an Vinylpyrrolidon einpolymerisiert enthalten und als Comonomere $\alpha,\beta$-monoolefinisch ungesättigte, meist 3 bis 5 C-Atome enthaltende Mono- und/oder Dicarbonsäuren und/oder deren Amide, wie besonders Acrylamid und Methacrylamid, sowie auch in Mengen bis zu 30 Gew.-% niedere Acrylester, wie besonders Methylacrylat und/oder niederer Vinylester wie besonders Vinylacetat und Vinylproprionat einpolymerisiert enthalten. Geeignet sind ferner Carboxymethylcellulosen. Die Schutzkolloide und/oder olefinisch ungesättigte Carbonsäuren der oben genannten Art sollen erfindungsgemäss dem Polymerisationsgemisch während des Monomerenzulaufs in je Zeiteinheit zunehmenden Mengen zugeführt werden. Dabei ist es möglich, schon bei Polymerisationsbeginn in der wässrigen Vorlage einen kleinen Anteil des Schutzkolloids und/oder der olefinisch ungesättigten Carbonsäure vorzulegen. Bei der Emulsionszulauf-Fahrweise wird dann nach dem Anspringen der Emulsionspolymerisation in die Vorlage eine wässrige Emulsion der weiteren Monomeren, die Emulgator und gegebenenfalls weitere Stabilisierungsmittel enthält, nach Massgabe des Fortschreitens der Emulsionspolymerisation zugeführt. Bei einer besonders einfachen Ausführungsform des erfindungsgemässen Verfahrens kann dem Vorratsgefäss für den Monomerenzulauf im Verlauf der Polymerisation aus einem weiteren Zulaufgefäss eine Lösung des Schutzkolloids und/oder der olefinisch ungesättigten Carbonsäure mit gleicher oder veränderlicher Geschwindigkeit zugeführt werden. Hierdurch steigt die Konzentration des Schutzkolloids und/oder der olefinisch ungesättigten Carbonsäure im Monomerenzulauf, der dem Polymerisationsgefäss zugeführt wird, während der Polymerisation an. Bei dem neuen Verfahren kann die wässrige Lösung des Schutzkolloids und/oder der olefinisch ungesättigten Carbonsäure dem Monomerenemulsions-Zulauf während des gesamten Polymerisationsvorgangs oder nur während nur eines oder mehrerer Zeitintervalle zugeführt werden. Auch ist es möglich, eine wässrige Lösung des Schutzkolloids und/oder der olefinisch ungesättigten Carbonsäure, deren Konzentration an Schutzkolloid und/oder olefinisch ungesättigter Carbonsäure ständig erhöht wird, dem Polymerisationsgefäss getrennt von dem Monomerenemulsionszulauf zuzuführen. Im allgemeinen hat es sich jedoch besonders bewährt, eine Schutzkolloidlösung gegebener Konzentration dem Vorratsgefäss der Monomerenemulsion gleichmässig, kontinuierlich während des gesamten Monomerenemulsions-Zulaufs zuzuführen. Wird bei dem neuen Verfahren Schutzkolloid und/oder olefinisch ungesättigte Carbonsäure schon in der wässrigen Vorlage vorgelegt, so soll deren Anteil jeweils nicht über 3 Gew.-%, bezogen auf die gesamten Monomeren, betragen.

Als nichtionische Emulgatoren, die bei dem neuen Verfahren vorzugsweise in einer Menge von 1 bis 3 Gew.-%, bezogen auf die Monomeren eingesetzt werden, können oxalkylierte, vorzugsweise oxethylierte Fettalkohole, Fettamine, Fettsäureamide und/oder meist 8 bis 12 C-Atome in den Alkylgruppen enthaltende Monoalkylphenole, die 5 bis 30, insbesondere 10 bis 25 Ethylenoxid-Einheiten im Molekül enthalten, z.B. oxethylierter Laurylalkohol, oxethylierter Oleylalkohol, oxethylierter Spermölalkohol und oxethylierter Stearylalkohol, oxethyliertes Stearinsäureamid, oxethyliertes Oleylamid, oxethylierte Ölsäure, oxethyliertes p-n-Nonylphenol, oxethyliertes p-Isooctylphenol und oxethyliertes p-n-Dodecylphenol, eingesetzt werden. Geeignete anionische Emulgatoren, deren Menge 0 bis 3, vorzugsweise 0,5 bis 2 Gew.-%, bezogen auf die Monomeren, betragen soll sind z.B. Schwefelsäureester von Fettalkoholen, wie Laurylsulfat, Sulfierungsprodukte von oxalkylierten, insbesondere oxethylierten, meist 8 bis 12 C-Atome im Alkylrest enthaltende Alkylphenolen, wie besonders p-n-Nonyl- und p-n-Dodecylphenol sowie p-Isooctylphenol, wasserlösliche Alkalisalze von Fettsäuren, wie Natriumstearat und Natriumoleat und sulfonierte und alkylierte Biphenylether geeignet. Bei dem neuen Verfahren ist es möglich, aber nicht erforderlich, übliche öl- und/oder wasserlösliche Regler mitzuverwenden, deren Menge bis 5 Gew.-%, bezogen auf die Monomeren betragen kann. Vorgezogen wird die Mitverwendung von wasserlöslichen Reglern in einer Menge von 0,1 bis 3 Gew.-%, bezogen auf die Gesamtmenge der Monomeren. Die wasserlöslichen Regler können allein in der Vorlage oder auch allein im Monomerenemulsions-Zulauf oder in beiden eingesetzt werden. Die Wasserlöslichkeit der Regler soll im allgemeinen mindestens 50 g je Liter, vorzugsweise mindestens 100 g je Liter betragen und als wasserlösliche Regler kommen vor allem Thioglykolsäure und Thiodiglykol in Frage. Ferner geeignet ist Buten-1-ol-3, Isopropanol, Vinylglykol, Cyclohexylamin-Hydrochlorid, Hydroxylammoniumsulfat, Buten-2-diol-1,4 und Thiodiessigsäure. Die Mitverwendung von Reglern dieser Art ist dann von Vorteil, wenn Dispersionen mit verhältnismässig hoher Viskosität hergestellt werden sollen.

Beim sogenannten Emulsions-Zulaufverfahren wird im allgemeinen ein Anteil von 1 bis 10% der gesamten Monomeren in einer wässrigen Vorlage vorgelegt, die einen Anteil der radikalbildenden Polymerisationsinitiatoren gegebenenfalls Schutzkolloid, Emulgatoren und gegebenenfalls Regler enthält. Diese Vorlage wird im allgemeinen auf Polymerisationstemperatur aufgeheizt und nach dem Anspringen der Polymerisation die restlichen Monomeren als wässrige Emulsion zusammen oder getrennt vom restlichen, im allgemeinen in Wasser gelöstem Polymerisationsinitiator, gegebenenfalls Regler und Schutzkolloid sowie Emulgatoren zugeführt. Die Zugabe der emulgierten restlichen Monomeren kann in gleichen oder wechselnden diskreten Anteilen oder vorzugsweise kontinuierlich nach Massgabe der Polymerisation erfolgen. Das Verhältnis von Monomeren zu wässriger Phase in der Vorlage und im Emulsionszulauf kann gleich oder verschieden sein. Es liegt im allgemeinen zwischen 4 : 100 und 100 : 50. Während der Polymerisation wird die Temperatur des Polymerisationsgemisches vorzugsweise bei 45 bis 80°C gehalten. Nach Zulaufende kann man in an sich üblicher Weise auspolymerisieren und abkühlen lassen. Bei dem neuen Verfahren erhält man Polyacrylat-Dispersionen, die hervorragende Pigmentverträglichkeit und günstige Viskosität, die meist 100 bis 1000 mPa.s beträgt, sowie ein besonders vorteilhaftes Fliessverhalten aufweisen. Soweit bei dem neuen Verfahren wasserlösliche monoolefinisch ungesättigte Comonomeren, insbesondere $\alpha,\beta$-monoolefinisch ungesättigte Carbonsäuren, wie besonders Acrylsäure und Methacrylsäure mitverwendet werden, können verhältnismässig hohe Mengen dieser Monomeren eingesetzt werden, ohne dass dabei eine Erhöhung des Stippengehalts auftritt. Man kann daher nach dem neuen Verfahren überraschenderweise Schutzkolloide enthaltende Polyacrylatdispersionen herstellen, die einen verhältnismässig grossen Anteil an Carboxylgruppen aufweisen, die aber einen sehr geringen Stippengehalt bei kleinen Teilchengrössen (hohe LD-Werte) und niedrigen Viskositäten haben. Dies ist mit herkömmlichen Massnahmen nicht möglich.

Die in den folgenden Beispielen angegebenen Teile und Prozente beziehen sich auf das Gewicht.

*Beispiel 1*

In einem Reaktionsgefäss, das mit Rührer, Rückflusskühler, Thermometer und zwei Zuläufen versehen ist, wird folgende wässrige Phase als Vorlage vorgelegt:

250 Teile Wasser,
 20 Teile Zulauf 1,
 10 Teile Zulauf 2

Zulauf 1:

262 Teile iso-Butylacrylat,
198 Teile Methylmethacrylat,
 4,6 Teile Acrylsäure,
 13,8 Teile Buten-2-diol-1,4,
 92 Teile einer 20%igen wässrigen Lösung eines mit 25 Mol Ethylenoxid ethoxylierten p-Isooctylphenols,

 23 Teile einer 20%igen wässrigen Lösung eines mit 25 Mol Ethylenoxid ethoxylierten und sulfonierten p-Isooctylphenols,
 94 Teile Wasser.

Zulauf 2:

100 Teile Wasser,
 4 Teile Kaliumperoxidsulfat.

Zulauf 3:

67,5 Teile einer 7%igen wässrigen Lösung von Hydroxyethylcellulose einer Viskosität von 250 mPa.s.

Die Vorlage wird unter Rühren auf 80°C erwärmt und $^1/_4$ Stunde anpolymerisieren lassen. Dann werden die Zuläufe 1 und 2 innerhalb von $2^1/_2$ Stunden gleichmässig unter Rühren zulaufen lassen. Während dieser Zeit wird Zulauf 3 gleichmässig in Zulauf 1 gegeben. Nach Zulaufende wird noch 2 Stunden nachpolymerisieren lassen und nach dem Abkühlen der pH-Wert unter Zugabe von 25%igem wässrigem Ammoniak auf 8 bis 8,5 gestellt. Man erhält eine wässrige, 45%ige Polyacrylat-Dispersion einer Viskosität von 82 mPa.s und des LD-Werts 64. Der Stippengehalt beträgt nur 0,03%.

*Vergleichsversuch*

Man arbeitet wie bei Beispiel 1 angegeben, gibt jedoch die wässrige Lösung der Hydroxyethylcellulose (Zulauf 3) von Anfang an zu Zulauf 1, so dass die gleiche Menge an Schutzkolloid gleichmässig, d.h. nicht in zunehmender Menge, dem Polymerisationsgemisch zugeführt wird. Während der Polymerisation wird der Ansatz pastös und koaguliert schliesslich.

*Beispiel 2*

Man arbeitet wie in Beispiel 1 angegeben, setzt jedoch als Zulauf 3 die 7%ige wässrige Lösung von Hydroxyethylcellulose einer Viskosität von 250 mPa.s in einer Menge von 337,5 Teilen ein. Man erhält eine wässrige Polyacrylat-Dispersion einer Viskosität von 530 mPa.s und des LD-Werts 52. Die Dispersion kann als Bindemittel für Anstrichmittel eingesetzt werden.

*Beispiel 3*

Man arbeitet wie in Beispiel 1 angegeben, gibt aber Zulauf 3 in gleichmässig ansteigender Menge zu Zulauf 1. Man erhält dann eine wässrige Polyacrylat-Dispersion der Viskosität 155 mPa.s und des LD-Werts 75. Der Stippengehalt beträgt nur 0,04%.

*Beispiel 4*

Man arbeitet wie in Beispiel 1 angegeben, gibt aber die 4,6 Teile Acrylsäure des Zulaufs 1 zu Zulauf 3, so dass der Anteil an Acrylsäure und Schutzkolloid in Zulauf 1 während der Zugabe von Zulauf 1 zum Polymerisationsgefäss ständig zunimmt. Man erhält dann eine Polyacrylat-Dispersion der Viskosität 140 mPa.s und des LD-Werts 51, deren Stippengehalt 0,04% beträgt.

*Beispiel 5*

Man arbeitet wie in Beispiel 1 angegeben, setzt aber zu Zulauf 1 noch 11,5 Teile Acrylsäure und als Zulauf 3 135 Teile der Hydroxyethylcellulose-Lösung ein. Man erhält dann eine 45%ige wässrige Polyacrylat-Lösung der Viskosität 476 mPa.s, des LD-Werts 59 und des Stippengehalts 0,3%.

## Beispiel 6

Man arbeitet wie in Beispiel 1 angegeben, setzt aber in Zulauf 1 zusätzlich 9,2 Teile Diacetonacrylamid und 18 Teile Wasser ein. Ausserdem werden in die Dispersion vor dem Abkühlen noch 9 Teile Adipinsäuredihydrazid eingerührt. Man erhält dann eine 45%ige wässrige Polyacrylat-Dispersion der Viskosität 106 mPa.s, des LD-Werts 63 und des Stippengehalts 0,05%.

## Beispiel 7

Man arbeitet wie in Beispiel 1 angegeben, setzt aber in Zulauf 1 zusätzlich 9,2 Teile N,N-Dimethylaminoethylmethacrylat ein. Erhalten wird dann unter sonst gleichen Bedingungen eine 45%ige wässrige Polyacrylat-Dispersion der Viskosität 120 mPa.s und des LD-Werts 58, deren Stippengehalt 0,03% beträgt.

## Beispiel 8

Man arbeitet wie in Beispiel 1 angegeben. Vorlage und Zuläufe setzen sich jedoch wie folgt zusammen:

Vorlage: 200 Teile Wasser
20 Teile Zulauf 1
10 Teile Zulauf 2

Zulauf 1:

390 Teile iso-Butylacrylat
210 Teile Methylmethacrylat
6 Teile Acrylsäure
45 Teile einer 20%igen wässrigen Lösung eines mit 25 Mol Ethylenoxid ethoxylierten p-Isooctylphenols
18 Teile Buten-2-diol-1,4
19 Teile Wasser

Zulauf 2:

100 Teile Wasser
4 Teile Kaliumperoxodisulfat

Zulauf 3:

30 Teile einer 5%igen wässrigen Lösung von Hydroxyethylcellulose einer Viskosität von 250 mPa.s.

Man erhält eine wässrige, 58%ige Polyacrylat-Dispersion einer Viskosität von 220 mPa.s und des LD-Werts von 41. Der Stippengehalt beträgt nur 0,02%.

## Beispiel 9

Man arbeitet wie in Beispiel 1 angegeben. Vorlage und Zuläufe setzen sich jedoch wie folge zusammen:

Vorlage: 200 Teile Wasser
20 Teile Zulauf 1
10 Teile Zulauf 2

Zulauf 1:

234,6 Teile Styrol
225,4 Teile n-Butylacrylat
36,8 Teile Acrylsäure
4,6 Teile Acrylamid
13,8 Teile Buten
46,0 Teile einer 20%igen wässrigen Lösung eines mit 25 Mol Ethylenoxid ethoxylierten Isoocylphenols
23,0 Teile einer 20%igen wässrigen Lösung eines mit 25 Mol Ethylenoxid ethoxylierten und sulfonierten Isooctylphenols
399 Teile Wasser

Zulauf 2:

100 Teile Wasser
4 Teile Kaliumperoxodisulfat

Zulauf 3:

30 Teile einer 5%igen wässrigen Lösung von Hydroxyethylcellulose einer Viskosität von 250 mPa.s.

Man erhält eine wässrige, 40%ige Polyacrylat-Dispersion einer Viskosität von 114 mPa.s und des LD-Werts von 53. der Stippengehalt beträgt nur 0,1%.

## Beispiel 10

Man arbeitet wie in Beispiel 1 angegeben, Vorlage und Zuläufe setzen sich jedoch wie folgt zusammen:

Vorlage: 250 Teile Wasser
20 Teile Zulauf 1
10 Teile Zulauf 2

Zulauf 1:

230 Teile n-Butylacrylat
230 Teile Methylmethacrylat
9,6 Teile Buten-2-diol-1,4
69 Teile einer 20%igen wässrigen Lösung eines mit 25 Mol Ethylenoxid ethoxylierten p-Isooctylphenols
23 Teile einer 20%igen wässrigen Lösung eines mit 25 Mol Ethylenoxid ethoxylierten sulfonierten p-Isooctylphenols
67,5 Teile einer 7%igen wässrigen Lösung von Hydroxyethylcellulose einer Viskosität von 250 mPa.s
94 Teile Wasser

Zulauf 2:

100 Teile Wasser
4 Teile Kaliumperoxodisulfat

Zulauf 3:

18,4 Teile Methacrylsäure
23 Teile Wasser.

Erhalten wird eine 45%ige wässrige Polyacrylat-Dispersion der Viskosität 1420 mPa.s, des Stippengehalts 0,06% und des LD-Werts 52.

## Patentanspruch

Verfahren zur Herstellung von wässrigen Polyacrylat-Dispersionen mit verbessertem Fliessverhalten durch Polymerisation von Acryl- und/oder Methacrylsäure-Estern 1 bis 10 C-Atome enthaltender Alkanole mit 0 bis 60 Gew.-% Styrol und/oder 0 bis 20 Gew.-% Vinylester und/oder 0 bis 10 Gew.-% wasserlöslichen monoolefinisch ungesättigten Comonomeren unter Emulsionszulauf der Monomeren in wässriger Emulsion bei 30 bis 95°C in Gegenwart üblicher radikalbildender Polymerisationsinitiatoren, von Schutzkolloiden, 0,5 bis 5 Gew.-% nichtionischen Emulgatoren und gegebenenfalls von Reglern, wobei die Gewichtsprozente jeweils auf die Gesamtmenge der Monomeren bezogen sind, und die Polymerisation in einer Vorlage, die gegebenenfalls einen kleinen Teil der Schutzkolloide und/oder von monoolefinisch ungesättigten Mono- und/oder Dicarbonsäuren enthält, begonnen wird, dadurch gekennzeichnet, dass das Schutzkolloid und/oder eine monoolefinisch ungesättigte Mono- und/oder Dicarbonsäure zum anderen Teil dem Polymerisationsgemisch während des je Zeiteinheit gleichmässig erfolgenden Zulaufs der Monomerenemulsion in je Zeiteinheit zunehmenden Mengen zugeführt wird.

## Claim

A process for the preparation of aqueous polyacrylate dispersions having improved rheological properties by polymerisation of acrylic acid esters and/or methacrylic acid esters of alkanols of 1 to 10 carbon atoms with from 0 to 60% by weight of styrene and/or from 0 to 20% by weight of vinyl esters and/or from 0 to 10% by weight of water-soluble monoolefinically unsaturated comonomers, with emulsion feed of the monomers in aqueous emulsion at from 30 to 95°C in the presence of conventional free-radial polymerization initiators, protective colloids and from 0.5 to 5% by weight of nonionic emulsifiers, and in the presence or absence of regulators, the percentages by weight being based in each case on the total amount of monomers, and the polymerization being started in a vessel which may contain a small proportion of the protective colloids and/or of monoolefinically unsaturated monocarboxylic acid and/or dicarboxylic acid, wherein the protective colloid and/or a monoolefinically unsaturated monocarbocylic acid and/or dicarboxylic acid is fed to the other part of the polymerization mixture in increasing amounts per unit time while the monomer emulsion is being run in uniformly per unit time.

## Revendication

Procédé de préparation de dispersions aqueuses de polyacrylate à comportement d'écoulement amélioré, par polymérisation d'esters d'acide acrylique et/ou méthacrylique et d'alcanols contenant 1 à 10 atomes C, avec 0 à 60% en poids de styrène et/ou 0 à 20% en poids d'ester vinylique 0 à 10% en poids de comonomères à insaturation mono-oléfinique, soluble dans l'eau, avec introduction des monomères en émulsion aqueuse, entre 30 et 95°C, en présence d'initiateurs de polymérisation formateurs de radicaux, de colloïdes protecteurs, 0,5 à 5% en poids d'émulsifiants non ioniques et, éventuellement, de régulateurs, les pourcentages en poids étant rapportés, chaque fois, à la quantité totale des monomères et la polymérisation étant commencée dans un récipient qui contient éventuellement une petite partie des colloïdes protecteurs et/ou d'acides mono- et/ou dicarboxyliques à insaturation mono-oléfinique, caractérisé par le fait que le colloïde protecteur et/ou un acide mono- et/ou dicarboxylique à insaturation mono-oléfinique est amené à l'autre partie du mélange de polymérisation en quantités croissantes dans le temps, pendant l'introduction de l'émulsion de monomères s'opérant régulièrement dans le temps.